# EUROPEAN PATENT SPECIFICATION

(11) **EP 0 324 650 B1**
(45) Date of publication and mention of the grant of the patent: **20.03.1996**
(21) Application number: 89300334.3
(22) Date of filing: 13.01.1989
(51) Int. Cl.: H04N 5/06, H04N 5/335, G06F 1/025

(54) **Timing pulse generators**
Taktimpulsgeneratoren
Générateurs d'impulsions de temps

(30) Priority: 14.01.1988 JP 6202/88
(43) Date of publication of application: 19.07.1989
(73) Proprietor: SONY CORPORATION, Tokyo 141 (JP)
(72) Inventor: Yamaguchi, Masanori c/o Patents Division, Shinagawa-ku Tokyo 141 (JP); Sato, Maki c/o Patents Division, Shinagawa-ku Tokyo 141 (JP)
(74) Representative: Pilch, Adam John Michael

(56) References cited:
- GB-A- 2 171 271
- PATENT ABSTRACTS OF JAPAN vol. 9, no. 81 (E-307)(1804) 10 April 1985
- PROCEEDINGS OF THE INTERNATIONAL CONFERENCE ON CONSUMER ELECTRONICS 1988, NEW YORK, USA pages 56 - 57; YAMAGUCHI ET AL.: 'A new timing generator IC for a CCD imager'
- PATENT ABSTRACTS OF JAPAN vol. 8, no. 4 (E-220)10 January 1984
- PATENT ABSTRACTS OF JAPAN vol. 8, no. 68 (P-264)30 March 1984
- PATENT ABSTRACTS OF JAPAN vol. 8, no. 68 (P-264)30 March 1984
- PATENT ABSTRACTS OF JAPAN vol. 10, no. 154 (P-463)4 June 1986

## Description

This invention relates to timing pulse generators for generating timing pulses by which the operation of a charge coupled device (CCD) imager may be controlled.

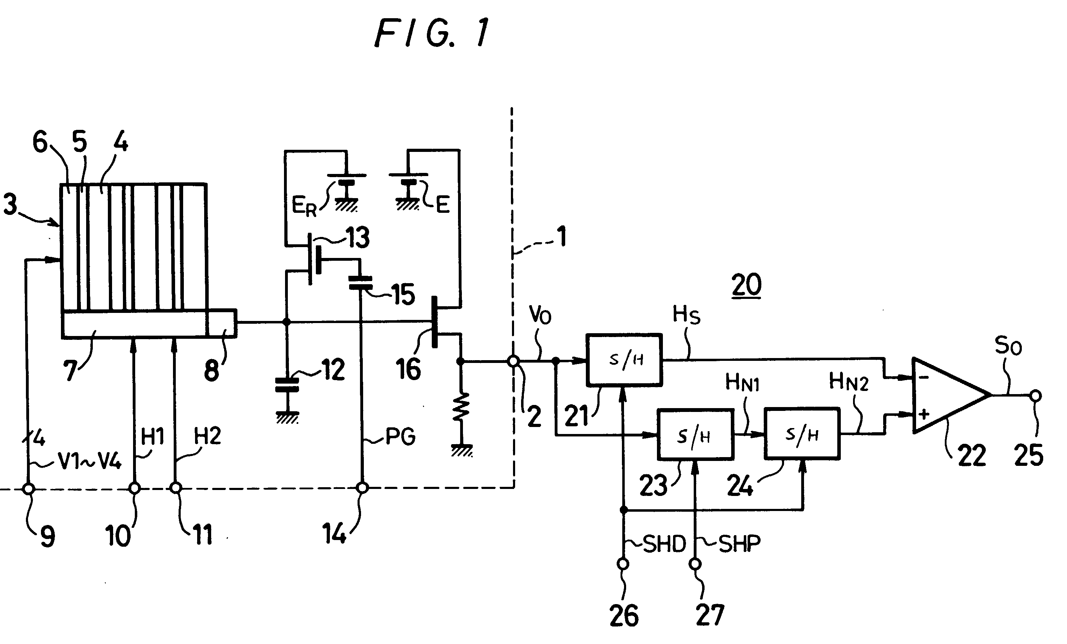

Figure 1 of the accompanying drawings shows an example of a CCD solid state imager of an interline transfer type.

Referring to Figure 1, there is shown a CCD device 1 which produces a charge detecting signal at its output terminal 2. The CCD device 1 includes a CCD solid state image pickup element 3 which comprises a light receiving section 4, a transfer gate 5, a vertical shift register 6, a horizontal shift register 7 and a charge detecting section 8.

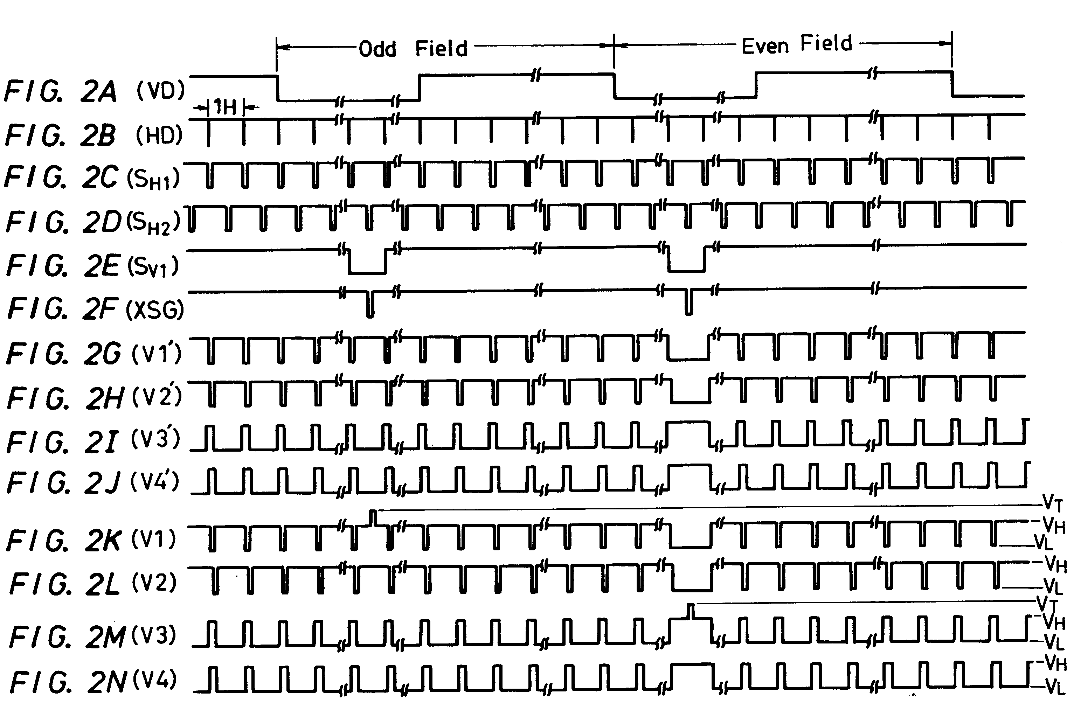

The vertical shift register 6 is supplied with four-phase vertical transfer clock pulses V1 to V4 from a terminal 9. The waveforms of the four-phase vertical transfer clock pulses V1 to V4 are respectively shown in Figures 2K to 2N of the accompanying drawings. 0n the basis of the four-phase vertical transfer clock pulses V1 to V4, signal charges accumulated in the light receiving section 4 are transferred to the vertical shift register 6 and the signal charges transferred to the vertical shift register 6 are transferred to the horizontal shift register 7. Specifically, the vertical transfer clock pulses V1 and V3 are ternary-value level clock pulses having three levels VL, VH and VT as shown in Figures 2K and 2M, while the vertical transfer clock pulses V2 and V4 are binary-value level clock pulses having two levels VL and VH as shown in Figures 2L and 2N. The vertical transfer clock pulse V1 goes to the level VT during the vertical blanking period in odd fields, while the vertical transfer clock pulse V3 goes to the level VT during the vertical blanking period in even fields. Figures 2A and 2B of the accompanying drawings illustrate vertical and horizontal synchronising pulses VD and HD, respectively.

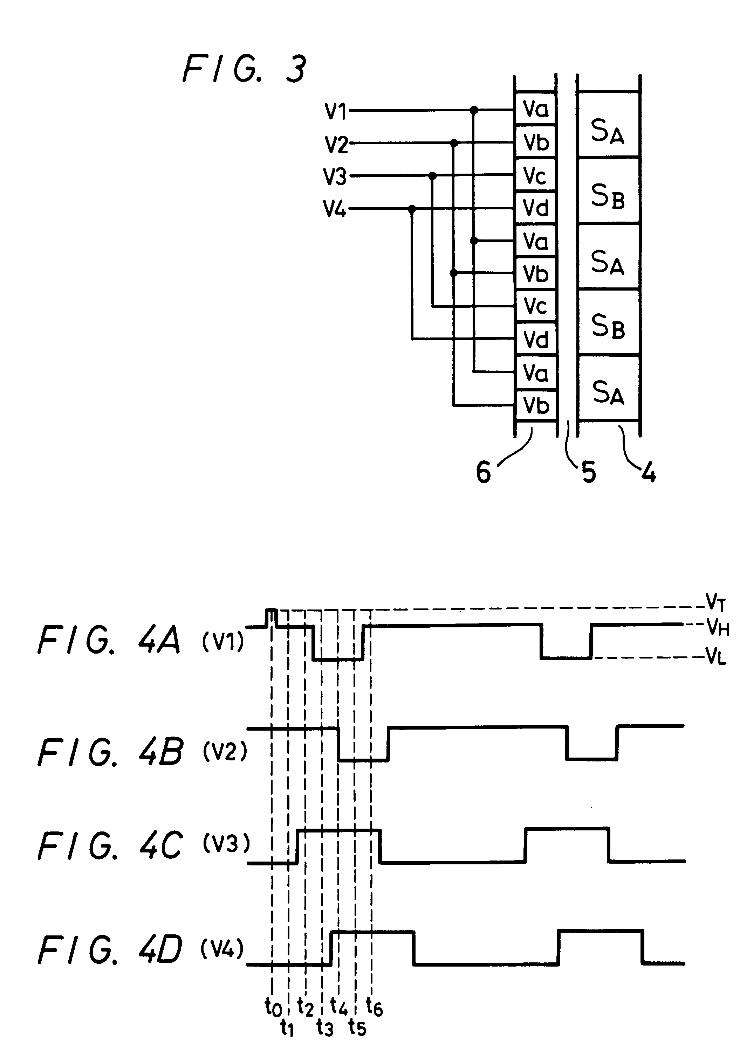

Figure 3 of the accompanying drawings schematically illustrates the relationship between the light receiving section 4, the transfer gate 5 and the vertical shift register 6. Referring to Figure 3, on the vertical shift register 6, there are formed electrodes Va, Vb, Vc and Vd at a half pitch of that of alternating light receiving elements SA and SB of the light receiving section 4. In this case, the electrodes Va and Vb of the vertical shift register 6 are arranged so as to correspond to, for example, the light receiving elements SA of the light receiving section 4. On the other hand, the electrodes Vc and Vd of the vertical shift register 6 are arranged so as to correspond to the light receiving elements SB of the light receiving section 4. The above-mentioned four-phase vertical transfer clock pulses V1 to V4 are respectively supplied to the electrodes Va to Vd of the vertical shift register 6.

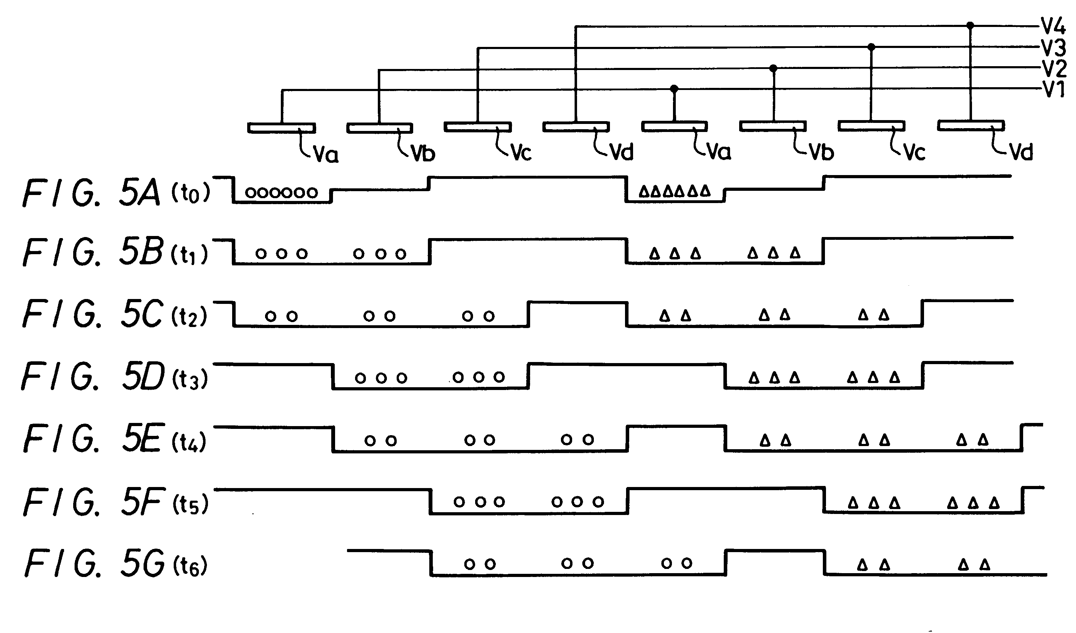

In this arrangement, the signal charges accumulated in the light receiving element SA are transferred through the transfer gate 5 to the portion of the vertical shift register 6 that corresponds to the electrode Va during the period in which the vertical transfer clock pulse V1 goes to the level VT within the vertical blanking period. Figures 4A to 4D of the accompanying drawings illustrate conditions in which the vertical transfer clock pulses V1 to V4 are respectively changed in level after a time t0, where the time t0 assumes the transfer timing. Figures 5A to 5G of the accompanying drawings illustrate the states of the potential wells and the signal charges under the electrodes Va to Vd at respective times t0 to t6 that are shown in Figures 4A to 4D, respectively. At the next time t1 following the time t0, the vertical transfer clock pulses V1 and V2 go to the level VH as shown in Figures 4A and 4B while the vertical transfer clock pulses V3 and V4 remain at the level VL as shown in Figures 4C and 4D so that the potential wells under the electrodes Va and Vb are increased in depth. Thus, the signal charges accumulated under the electrode Va are distributed into the potential wells located under the electrodes Va and Vb. At the next time t2, the vertical transfer clock pulses V1, V2 and V3 go to the level VH while the vertical transfer clock pulse V4 remains at the level VL so that the potential wells under the electrodes Va, Vb and Vc are increased in depth. Thus, the signal charges accumulated in the potential wells under the electrodes Va and Vb are further distributed into the potential wells under these electrodes Va, Vb and Vc. At the next time t3, the vertical transfer clock pulse V1 goes to the level VL, the vertical transfer clock pulses V2 and V3 remain at the level VH and the vertical transfer clock pulse V4 remains at the level VL so that the signal charges accumulated in the potential wells under the above-mentioned electrodes Va, Vb and Vc are concentrated in the potential wells under the electrodes Vb and Vc.

The process continues in a similar manner until, at the time t6, the signal charges are transferred to the potential well under the next electrode Va. These transfer operations are carried out continuously, whereby the signal charge initially accumulated under the electrode Va is sequentially transferred in the vertical direction.

In the even fields, the signal charge accumulated in the light receiving element SB is transferred through the transfer gate 5 to the portion of the vertical shift register 6 corresponding to the electrode Vc during the period in which the vertical transfer clock pulse V3 goes to the level VT within the vertical blanking period. Then, in similar manner to the case of the odd fields, the signal charge is transferred at every scanning line by the vertical shift register 6.

While in the above-mentioned example the drive operation of a so-called frame-read type CCD is described, the above arrangement can also be applied to the drive operation of a field-read type CCD.

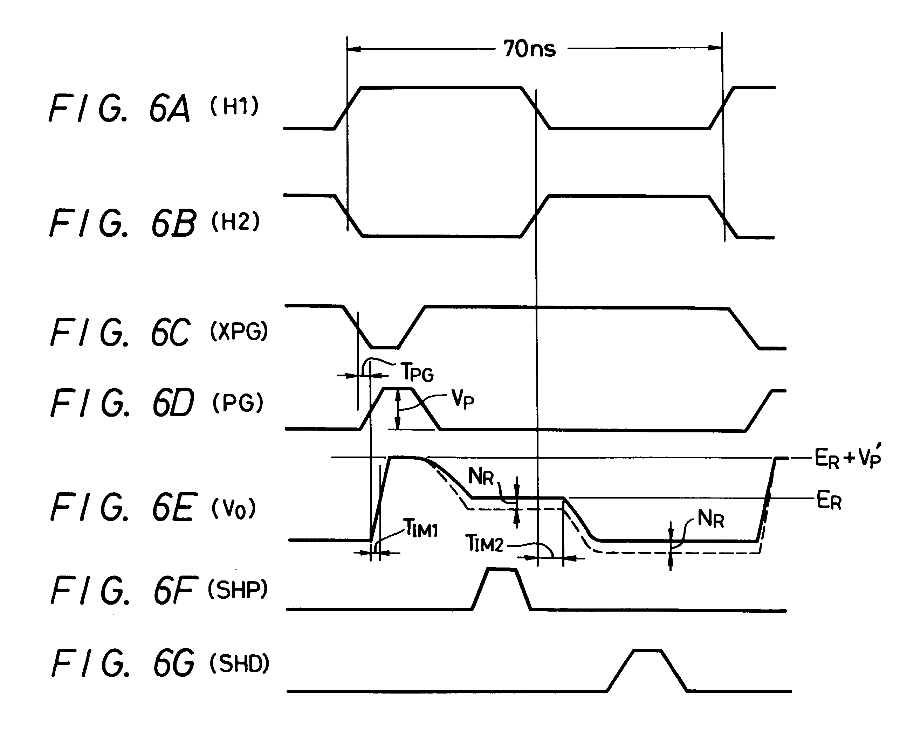

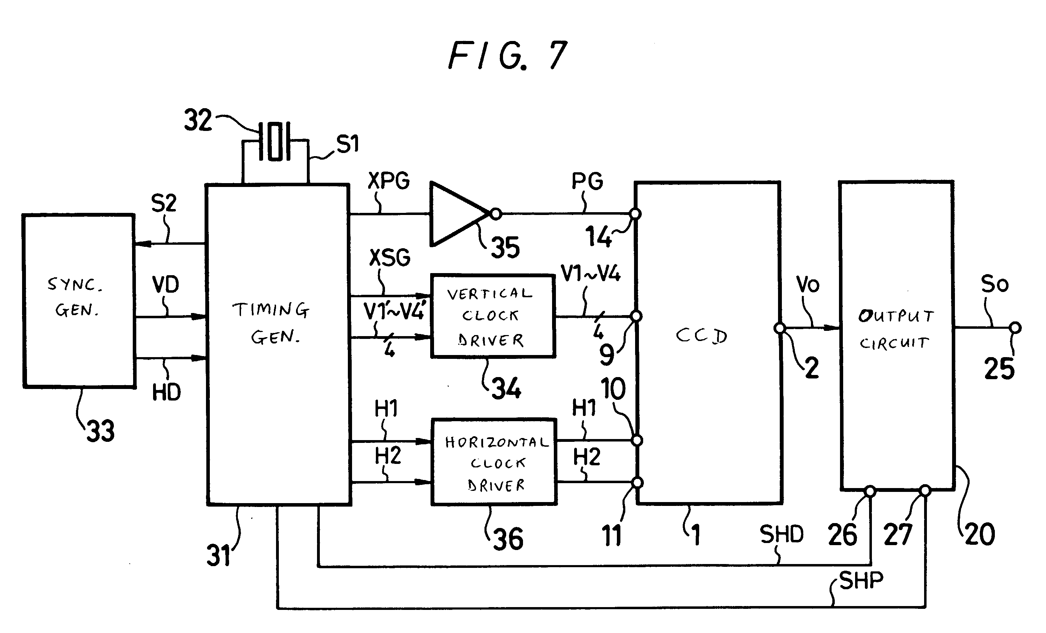

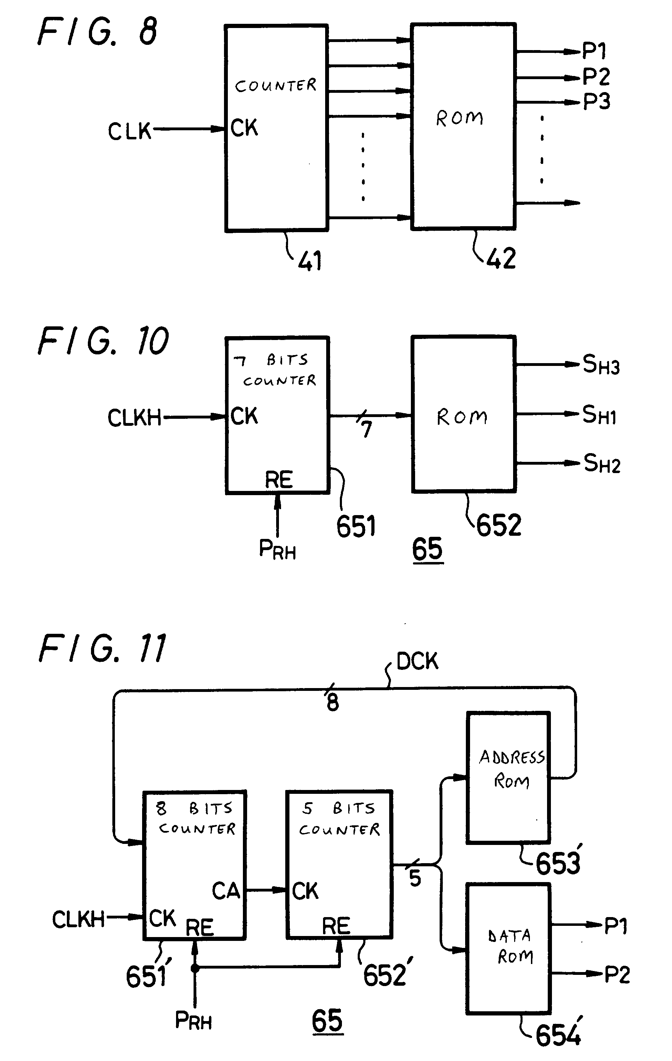

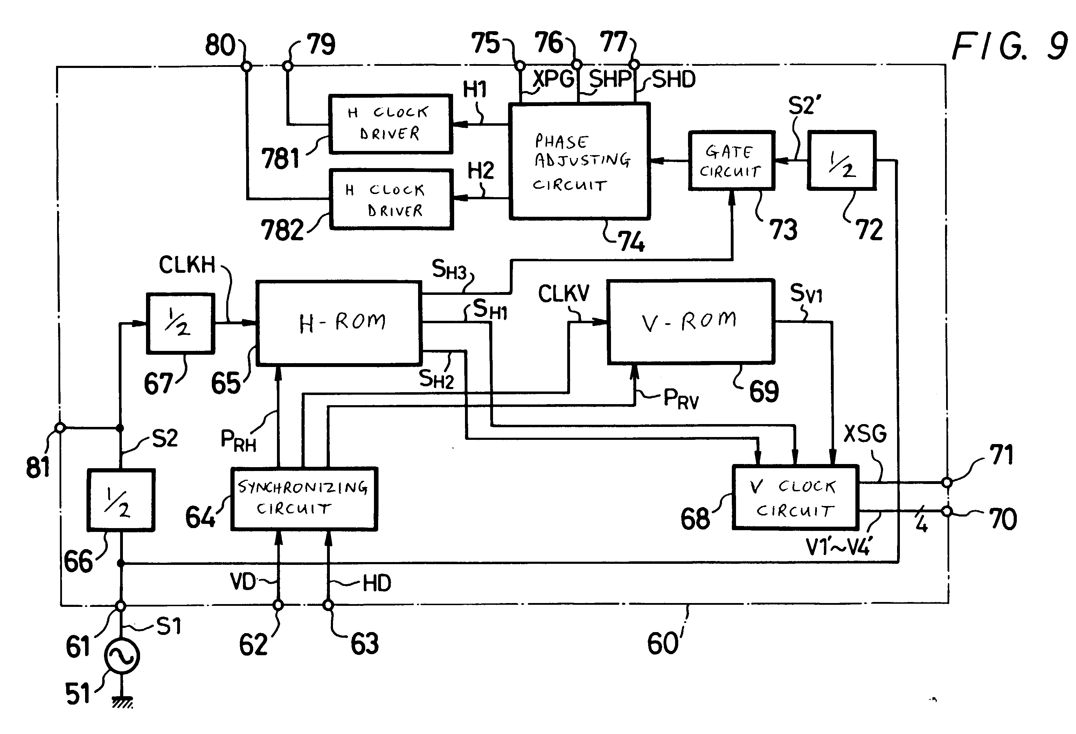

Turning back to Figure 1, the horizontal shift register 7 is supplied with two-phase horizontal transfer clock pulses H1 and H2 of one pixel period, for example (as shown in Figures 6A and 6B of the accompanying drawings), 70 ns period from terminals 10 and 11, whereby the signal charges are sequentially delivered from the charge detecting section 8.

The output terminal of the charge detecting section 8 is connected to ground via a capacitor 12 and is also connected to the source of a pre-charging field-effect-transistor (FET) 13 whose drain is supplied with a DC voltage ER. The FET 13 receives at its gate a reset pulse PG (shown in Figure 6D of the accompanying drawings) synchronised with the horizontal transfer clock pulses H1 and H2 from a terminal 14 through a capacitor 15. Further, the junction between the charge detecting section 8 and the capacitor 12 is connected to the gate of a source-follower FET 16 and a DC voltage E is supplied to the drain of the FET 16 whose source is connected to the output terminal 2.

With the above-described arrangement, during the period in which the reset pulse PG is at a high level, the FET 13 is turned on, so that the capacitor 12 is charged up to the voltage ER. While the voltage of the capacitor 12 should inherently become substantially the value ER, the above reset pulse PG is applied to the capacitor 12 through the gate-source capacity of the FET 13. Thus, the voltage of the capacitor 12 is ER + VP′ during the period in which the reset pulse PG is supplied, where VP′ is the voltage brought about by the jump-in of the pulse PG. When this reset pulse PG disappears, the voltage of the capacitor 12 becomes substantially the above value ER. Reset noise NR is superimposed upon this voltage. Thereafter, substantially in synchronism with the leading edge of the horizontal transfer clock pulse H2, the voltage across the capacitor 12 is lowered in response to the signal charge from the charge detecting section 8. Thus, at the output terminal 2, there is developed a charge detecting voltage V0 which is shown in Figure 6E of the accompanying drawings. In Figure 6E, ER represents a preset level, and the level following the reset level becomes a signal level. This signal level has superimposed thereon noise of which the level is the same as that of the reset noise NR superimposed on the reset level.

An output signal SO is detected from the output voltage V0 as follows. In this case, the reset noise NR superimposed upon the signal level portion and of which the level becomes different at every reset operation is removed. In other words, it should be noted that when the reset noise NR is superimposed upon the signal level portion, the reset noise NR of the same level is superimposed upon the reset level portion. In Figure 6E, a broken line shows the condition that the reset noise NR is superimposed upon the reset and signal level portions.

Referring again to Figure 1, the output voltage V0 from the output terminal 2 is supplied to a sample and hold circuit 21 which forms part of an output circuit 20. A sampling pulse SHD (shown in Figure 6G of the accompanying drawings) corresponding to the signal level period is supplied from a terminal 26 to the sample and hold circuit 21 which samples and holds the signal level portion of the output voltage V0. The hold output HS from the sample and hold circuit 21 is supplied to an inverting input terminal of an operational amplifier 22.

Further, the output voltage V0 is supplied to another sample and hold circuit 23. A sampling pulse SHP (shown in Figure 6F of the accompanying drawings) corresponding to the reset level period is supplied from a terminal 27 to the sample and hold circuit 23 which then samples and holds the reset level portion of the output voltage V0. The hold output HN1 from the sample and hold circuit 23 is supplied to a further sample and hold circuit 24. The sample and hold circuit 24 holds the hold output HN1 in response to the sampling pulse SHD from the terminal 26. The hold output HN2 from the sample and hold circuit 24 is supplied to the non-inverting input terminal of the operational amplifier 22.

Jump-in pulses appear on the hold outputs HS, HN1 and HN2 corresponding to the respective sampling pulses.

In the above-described arrangement, when the reset noise NR whose level is changed at every reset operation is superimposed upon the output voltage V0 as shown in Figure 6E, although this is not shown, the reset noise NR is also superimposed on the hold outputs HS, HN1 and HN2 of the sample and hold circuits 21, 23 and 24. Thus, the reset noise NR can be eliminated by calculating the difference between the hold outputs HS and HN1. However, the hold outputs HS and HN1 are produced by sampling the output voltage V0 at the different time points so that a phase difference occurs at the time point when the jump-in pulses appear. Thus, if the difference between the hold outputs HS and HN1 is merely calculated, the jump-in pulses appear as they are. In this example, since the hold output HN1 is further sampled and held by the sampling pulse SHD as described above, the jump-in pulse in the hold output HN2 becomes in-phase with the jump-in pulse in the hold output HS.

Therefore, at an output terminal 25 of the operational amplifier 22, there is produced an output S0 from which the reset noise NR is removed and in which the jump-in pulse in the sample and hold operation is suppressed adequately.

The vertical transfer clock pulses V1 to V4, the horizontal transfer clock pulses H1, H2, the reset pulse PG and the sampling pulses SHD and SHP which are all supplied to the CCD solid state imager of the example shown in Figure 1 may be produced by the circuit arrangement shown in Figure 7 of the accompanying drawings.

Referring to Figure 7, there is shown a timing pulse generator circuit 31. The timing pulse generator circuit 31 is supplied with a frequency signal S1 from a quartz oscillator 32 having a frequency of, for example, 8 fsc where fsc represents the chrominance subcarrier frequency, 3.58 MHz in the NTSC system. The timing pulse generator circuit 31 generates a frequency signal S2 having a frequency of 4 fsc, the frequency signal S2 being supplied to a synchronising signal generator 33. The synchronising signal generator 33 responds to the frequency signal S2 to generate a vertical synchronising pulse VD and a horizontal synchronising pulse HD whose waveforms are shown in Figures 2A and 2B. These vertical and horizontal synchronising pulses VD and HD are supplied to the timing pulse generator circuit 31. Figures 2C to 2J of the accompanying drawings show other pulses produced by the circuit arrangement of Figure 7.

The timing pulse generator circuit 31 also produces a sensor-gate signal XSG (shown in Figure 2F) that determines a read-out period in which the signal charges are transferred from the light receiving portion 4 of the CCD solid state image pickup element 3 to the vertical shift register 6, and vertical transfer clock pulses V1′ to V4′ of which the waveforms are respectively shown in Figures 2G to 2J. These pulses are supplied to a vertical clock driver 34. The vertical clock driver 34 supplies the vertical transfer clock pulses V1 to V4 (shown in Figures 2K to 2N) to the terminal 9 of the CCD device 1. The timing pulse generator circuit 31 further produces a pulse XPG which is shown in Figure 6C of the accompanying drawings. This pulse XPG is supplied to a reset pulse driver 35 that is formed by an inverter. The reset pulse driver 35 supplies the reset pulse PG (shown in Figure 6D) to the terminal 14 of the CCD device 1. Also, the timing pulse generator circuit 31 produces the horizontal transfer clock pulses H1 and H2 (shown in Figures 6A and 6B). These horizontal transfer clock pulses H1 and H2 are supplied to the terminals 10 and 11 of the CCD device 1 via a horizontal clock driver 36. Moreover, the timing pulse generator circuit 31 generates the sampling pulses SHP and SHD (shown in Figures 6F and 6G) which are then supplied to the respective terminals 27 and 26 of the output circuit 20. In Figure 6D, the reference TPG represents the delay time brought about by the reset pulse driver 35, and the references TIM1 and TIM2 in Figure 6E represent delay times brought about by the CCD device 1.

In the timing pulse generator circuit 31, the circuit for generating the timing pulses such as the vertical transfer clock pulses V1' to V4', the sensor-gate signal XSG and the like is formed by, for example, a logic circuit. In such an arrangement, the generated timing pulses are uniquely determined by the logic circuit arrangement, so that if the timing pulses to be generated are modified or corrected, the above-mentioned circuit has to be re-designed to include the modification or correction. This causes difficulties when different timing pulses are required.

To overcome this problem, it has been proposed that the timing pulses may be generated by the use of a read only memory (ROM) so that the timing pulses can be readily modified or corrected without cumbersome re-design. Referring to Figure 8 of the accompanying drawings, there are provided a counter 41 and a ROM 42. Data relating to timing pulses P1, P2, P3 .... are written in the respective addresses of the ROM 42. The count output from the counter 41 is supplied to the ROM 42 as an address signal and the pulses P1, P2, P3, .... are delivered from the ROM 42.

According to the example of Figure 8, the timing pulse repeating in the horizontal direction and the timing pulse repeating in the vertical direction are derived from the common ROM 42 so that the capacity of the ROM 42 has to be relatively large. For example, in the case of the NTSC system, there is a relationship expressed by 2 fsc = 455 fH (fH representing the horizontal frequency) as well as a relationship expressed by 525 lines/frame, so that if the frequency of a clock pulse CLK supplied to the clock terminal CK of the counter 41 is 2 fsc, then data for generating one timing pulse is calculated from 455 x 525 = 238875 bits. Therefore, the ROM 42 requires a capacity of N x 238875 bits to generate N timing pulses, where N is a positive integer. Thus, the capacity of the ROM 42 has to be selected to be the nearest power of two which is more than 238875 bits, in this example, 262144 (= 2¹⁸) bits corresponding to one timing pulse, wherein if the address counter can specify 262144 addresses, the counter 41 should be an 18-bit counter. As a result, the above previously-proposed technique needs a very large capacity ROM and a large scale counter.

In accordance with the present invention there is provided a timing pulse generator for generating at least a first timing pulse with a vertical scanning frequency and a second timing pulse with a horizontal scanning frequency, both of said first and second timing pulses being used for controlling a charge coupled device imager, said timing pulse generator comprising:
a first address counter for counting a first reference pulse having the horizontal scanning frequency;
first read only memory means supplied with the output of said first address counter as a read out address control signal and for generating said first timing pulse;
a second address counter for counting a second reference pulse having a frequency an integer multiple times higher than that of said horizontal scanning frequency;
second read only memory means supplied with the output of said second address counter as a read out address control signal and for generating said second timing pulse; and
clock signal generating means for generating clock signals in accordance with said first and second timing pulses.

In a preferred embodiment of the present invention, to be described in greater detail hereinafter, a timing pulse generator circuit is provided in which the memory capacities can be reduced considerably compared to the previous proposal.

The invention will now be described by way of example with reference to the accompanying drawings, throughout which like parts are referred to by like references, and in which:
Figure 1 is a block diagram of a CCD imager;
Figures 2A to 2N are waveform diagrams of clock and other pulses for driving the CCD imager of Figure 1;
Figure 3 is a diagram showing an arrangement of the light receiving section of the CCD imager of Figure 1;
Figures 4A to 4D are timing charts used to explain the operation of a vertical shift register in the CCD imager;
Figures 5A to 5G are waveform diagrams of clock pulses supplied to the vertical shift register used in the CCD imager;
Figures 6A to 6G are diagrams for explaining the operation of a horizontal shift register used in the CCD imager;
Figure 7 is a block diagram showing a driving circuit for driving the CCD imager of Figure 1;
Figure 8 is a block diagram showing an example of a previously-proposed timing pulse generator;
Figure 9 is a block diagram showing a timing pulse generator according to an embodiment of the present invention;
Figure 10 is a block diagram showing an example of a horizontal period timing pulse generator circuit which may be used in the timing pulse generator of Figure 9;
Figure 11 is a block diagram showing another example of a horizontal period timing pulse generator circuit which may be used in the timing pulse generator of Figure 9;
Figures 12A and 12B are waveform diagrams for explaining the operation of the horizontal period timing pulse generator circuit shown in Figure 11;
Figure 13 is a data table for explaining the operation of the horizontal period timing pulse generator circuit shown in Figure 11;
Figure 14 is a data table also for explaining the operation of the circuit shown in Figure 11;
Figure 15 is a block diagram showing a further example of a horizontal period timing pulse generator circuit which may be used in the arrangement of Figure 9;
Figure 16 is a block diagram showing an example of a vertical period timing pulse generator circuit which may be used in the arrangement of Figure 9;
Figure 17 is a block diagram showing an arrangement of a phase-adjusting section in the block diagram of Figure 9;
Figure 18 is a block diagram showing an arrangement of a clock driver in the block diagram of Figure 9; and
Figure 19 is a circuit diagram showing an arrangement of an inverter used in the clock driver of Figure 18.

Figure 9 shows a timing pulse generator circuit 60 embodying the present invention. An oscillator 51 produces a frequency signal S1 having a frequency of, for example, 8 fsc and this frequency signal S1 is supplied to a terminal 61 of the timing pulse generator circuit 60. The timing pulse generator circuit 60 receives at its terminals 62, 63 a vertical synchronising pulse VD and a horizontal synchronising pulse HD from a synchronising signal generator (not shown). These vertical and horizontal synchronising pulses VD and HD are supplied to a synchronising circuit 64 within the timing pulse generator circuit 60. The waveforms of these vertical and horizontal synchronising pulses VD and HD are shown in Figures 2A and 2B.

The circuit 60 includes a horizontal read only memory (ROM) 65. The frequency signal S1 applied to the terminal 61 is supplied through a half frequency divider 66 to a half frequency divider 67 which produces a frequency signal S2 having a frequency of 2 fsc. This frequency signal S2 is supplied to the horizontal ROM 65 as a clock pulse CLKH. The synchronising circuit 64 produces a reset pulse PRH of the horizontal period, and this reset pulse PRH is supplied to the horizontal ROM 65. The horizontal ROM 65 produces pulses SH1 and SH2 that are repeated at every horizontal period as shown in Figures 2C and 2D, and a pulse SH3 which is used to specify the period in which the horizontal transfer clock pulses H1 and H2 are not produced during the vertical transfer period.

The horizontal ROM 65 may in practice be constructed as, for example, shown in Figure 10.

As Figure 10 shows, a 7-bit counter 651 is provided which forms an address counter. The clock pulse CLKH from the frequency divider 67 is supplied to the clock terminal CK of the counter 651 and the reset pulse PRH is supplied to the reset terminal RE thereof. The 7-bit count output from the counter 651 is supplied to a ROM 652 as an address signal. Data of the timing pulses repeated in the horizontal period are written in the respective addresses of the ROM 652. In the NTSC system, the relationship 2 fsc = 455 fH is established and the clock pulse CLKH has a frequency of 2 fsc, so that data of 455 bits are needed to produce one timing pulse. Considering noise superimposed upon the video signal, most of the timing pulses are changed within the horizontal blanking period so that in this embodiment, only the data preceding and subsequent to the change of the timing pulse are written in the ROM 652. For example, data of 128 bits may be written in the ROM 652 in order to produce one timing pulse. Since data of 128 bits are written in the ROM 652 in order to produce one timing pulse repeated in the horizontal interval, the address counter may be adequately formed by the 7-bit counter 651 because the address counter can specify 128 (=2⁷) addresses. Since only the data preceding and subsequent to the change of the timing pulse are written in the ROM 652, a control signal (not shown) derived from, for example, the synchronising circuit 64 may control the count operation of the counter 651 so that the data are read out from the ROM 652 at a corresponding timing.

Alternatively, the horizontal ROM 65 may be constructed as, for example, shown in Figure 11.

Referring to Figure 11, there is shown an 8-bit counter 651′. The 8-bit counter 651′ receives at its clock terminal CK the clock pulse CLKH and at its reset terminal RE the reset pulse PRH. The 8-bit counter 651′ is further supplied with data DCK that indicates the number n of the clock pulse CLKH in order to determine the duration of the interval. The 8-bit counter 651′ is set in the n-scale counter mode to produce a carry output each time it counts n clock pulses.

There is provided a 5-bit counter 652′ which receives at its clock terminal CK the carry output from the 8-bit counter 651′. The reset pulse PRH is supplied to the reset terminal RE of the 5-bit counter 652′ whose 5-bit count output is supplied to an address ROM 653′ and a data ROM 654′ as an address signal.

The 8-bit data DCK is written in the respective addresses of the address ROM 653′. This 8-bit data DCK indicates the number n of the clock pulses CLKH which determine the duration of the interval from a certain time point where the timing pulse is changed to the next time point. Of the data of the timing pulses, only the data at the change of the timing pulse is written in the respective address of the data ROM 654′.

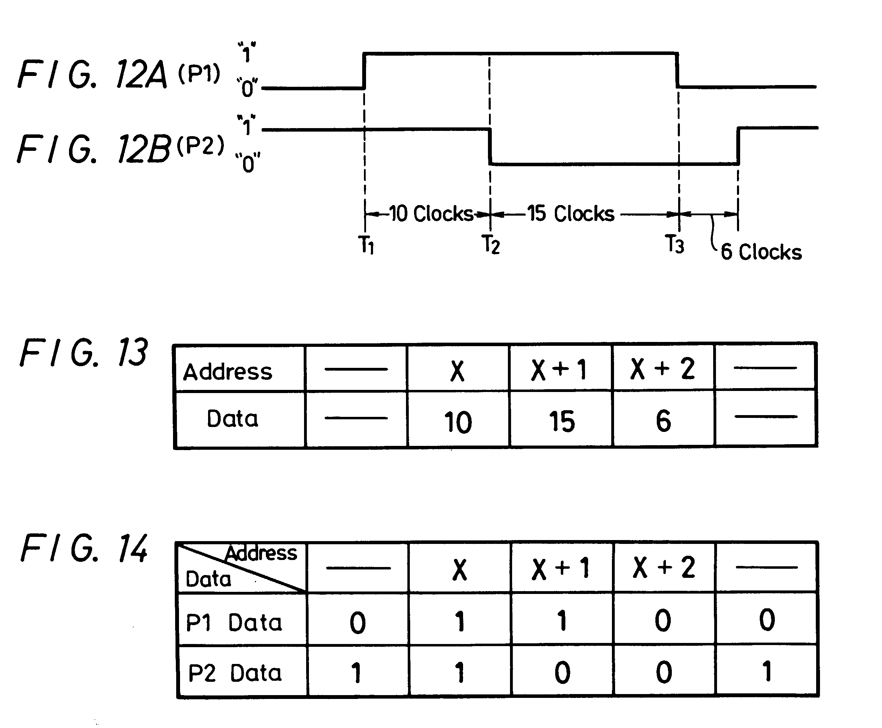

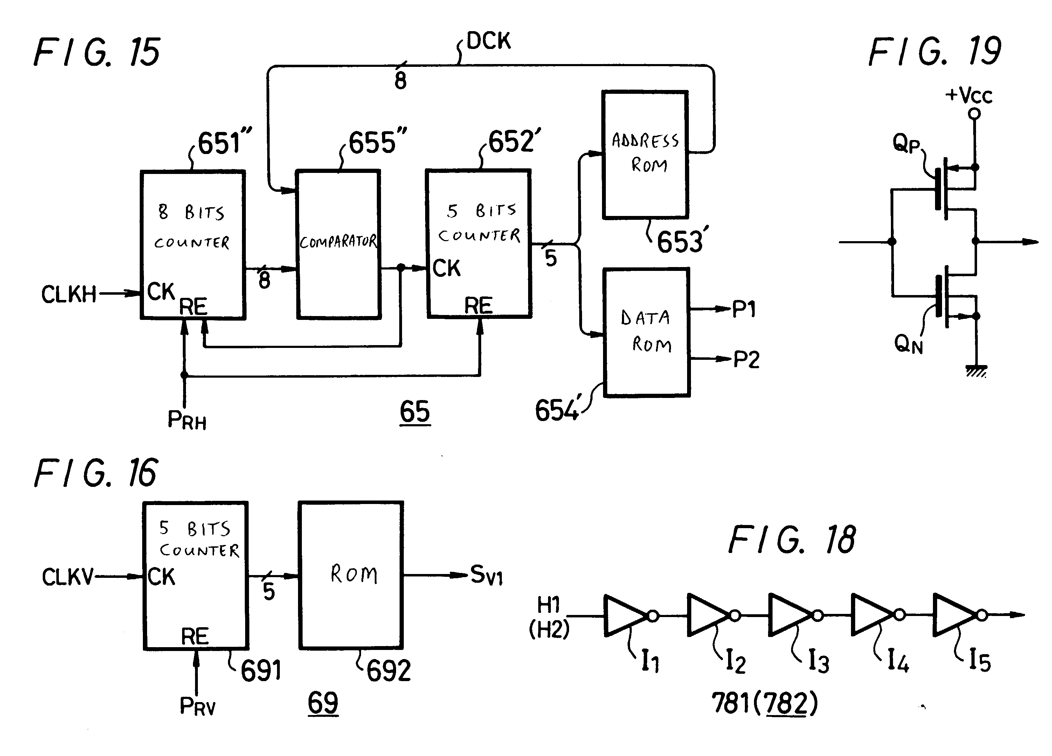

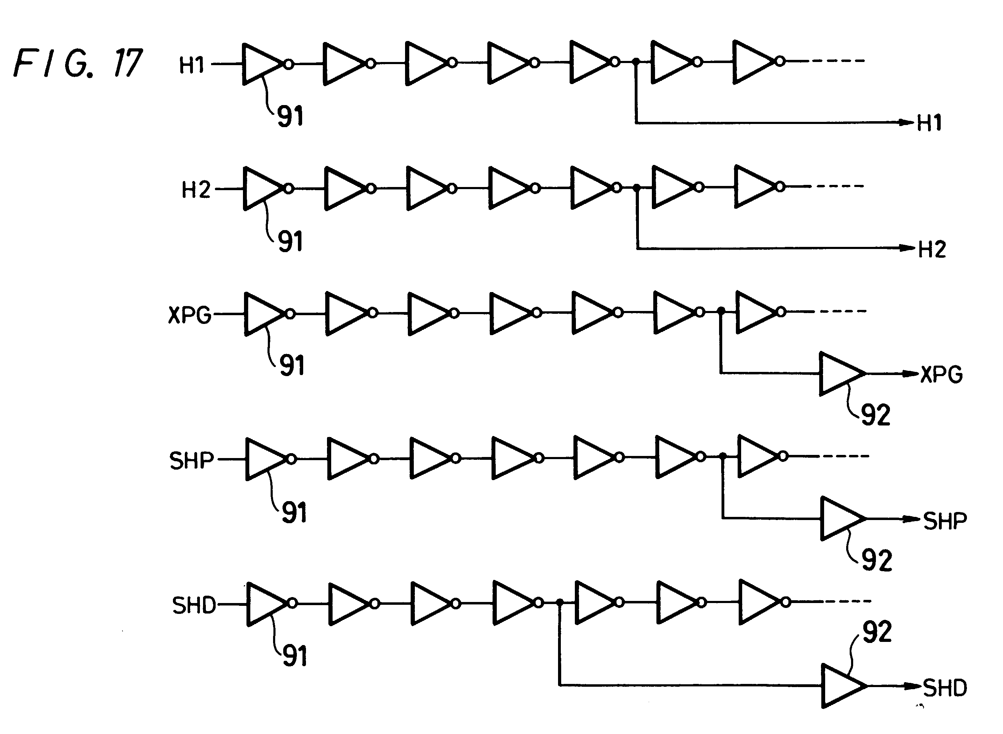

Although the data ROM 654′ produces the pulses SH1, SH2 and SH3 in practice, let it be assumed for simplicity that the data ROM 654′ produces timing pulses P1 and P2 whose waveforms are illustrated in Figures 12A and 12B. In this case, "10", "15" and "6" are written in the addresses X, X+1 and X+2 of the address ROM 653′ as the data DCK as shown in a data table forming Figure 13. Also, "1", "1" and "0" are written in the addresses X, X+1 and X+2 of the data ROM 654′ as data for the timing pulse P1, and "1", "0" and "0" are also written therein as data for the timing pulse P2 as shown in a data table forming Figure 14.

The data DCK from the address ROM 653′ is supplied to the above-mentioned 8-bit counter 651′.

In the circuit arrangement shown in Figure 11, when the 5-bit counter 652′ is, for example, reset at a time point T1 shown in Figures 12A and 12B, the 5-bit counter 652′ produces the count output "X" and the address ROM 653′ produces the data DCK of "10", thus setting the 8-bit counter 651′ in the 10-scale counter mode. Also, the timing pulses P1 and P2 derived from the data ROM 654′ both go to the high level "1", as shown in Figure 12. Then, the 8-bit counter 651′ is set in the 10-scale counter mode so that the 8-bit counter 651′ produces the carry output at a time point T2 when it has been supplied with 10 clock pulses CLKH. Accordingly, at this time point T2, the 5-bit counter 652′ produces the count output "X+1" and the address ROM 653′ produces the data DCK of "15", setting the 8-bit counter 651′ in the 15-scale counter mode. Also, the timing pulses P1 and P2 from the data ROM 654′ go to the high level "1" and the low level "0", respectively. Then, the 8-bit counter 651′ is set in the 15-scale counter mode so that at a time point T3 when the 8-bit counter 651′ has been supplied with 15 clock pulses CLKH, it produces a carry output. At this time point T3, the 5-bit counter 652′ produces the count output "X+2" and the address ROM 653′ produces the data DCK of "6" so that the 8-bit counter 651′ is set in the 6-scale counter mode. Also, the timing pulses P1 and P2 derived from the data ROM 654′ both go to the low level "0". The circuit arrangement will repeatedly operate in a similar manner. Accordingly, the data ROM 654′ produces the timing pulses P1 and P2 whose waveforms are shown in Figures 12A and 12B, respectively. In other words, although the horizontal ROM 65 is modified as described above in connection with the example of Figure 11, the horizontal ROM 65 can produce the pulses SH1, SH2 and SH3.

Furthermore, the horizontal ROM 65 might be formed as, for example, shown in Figure 15.

As Figure 15 shows, there is provided an 8-bit counter 651˝ which receives at its clock terminal CK the clock pulse CLKH and at its reset terminal RE the reset pulse PRH. The counter 651˝ supplies its 8-bit count output to a comparator 655˝. Also, the comparator 655˝ is supplied with the data DCK from the address ROM 653′ The comparator 655˝ produces, when the count output from the counter 651˝ coincides with the data DCK, a coincidence detection pulse. The coincidence detection pulse is supplied to the clock terminal CK of the 5-bit counter 652′. The counter 651˝ is reset every time when the coincidence detection pulse is produced. Other portions of the circuit are arranged similarly to those of the example shown in Figure 11.

As will be apparent, the circuit arrangement shown in the example of Figure 15 can be operated similarly to that of the example shown in Figure 11.

Referring back to Figure 9, a vertical ROM 69 is provided. The synchronising circuit 64 produces a clock pulse CLKV of horizontal period and a reset pulse PRV of frame period. The clock pulse CLKV and the reset pulse PRV are supplied to the vertical ROM 69, which produces a pulse SV1 that is repeated in the vertical period. The pulse SV1 goes to a low level in correspondence with the read-out period of the CCD solid state image pickup element 3 in the odd and even fields, as shown in Figure 2E.

The vertical ROM 69 may be constructed as, for example, shown in Figure 16.

As Figure 16 shows, there is provided a 5-bit counter 691 which forms an address counter. The 5-bit counter 691 receives at its clock terminal CK the clock pulse CLKV and at its reset terminal RE the reset pulse PRV. The 5-bit count output from the 5-bit counter 691 is supplied to a ROM 692 as an address signal. Data of timing pulses repeated in the vertical period is written in each of the addresses of the ROM 692. In the case of the NTSC system, the relation of 525 lines/frame is established so that data of 525 bits are needed to produce one timing pulse. However, when the noise superimposed upon the video signal is taken into consideration, most of the timing pulses are changed during the vertical blanking period so that, in this embodiment, only data preceding and subsequent to the change of timing pulse are written in the ROM 692. For example, data of 32 bits have to be written in the ROM 692 in order to produce one timing pulse. Since data of 32 bits have to be written in the ROM 692 in order to produce one timing pulse repeating at the vertical period as described above, it is sufficient that the address counter can specify 32 (=2⁵) addresses. Thus, the address counter is formed of the 5-bit counter 691 as described above. Only the data preceding and subsequent to the change of timing pulse are written in the ROM 692 so that the control signal (not shown) from, for example, the synchronising circuit 64 controls the count operation of the counter 691 in order to read out the data from the ROM 692 at a corresponding timing.

Turning back to Figure 9, the pulses SH1 and SH2 from the horizontal ROM 65 and the pulse SV1 from the vertical ROM 69 are supplied to a vertical clock circuit 68. The vertical clock circuit 68 produces the vertical transfer clock pulses V1′ to V4′ and the sensor-gate signal XSG which are then supplied to terminals 70 and 71, respectively. The waveforms of the vertical clock pulses V1′ to V4′ are shown in Figures 2G to 2J and the waveform of the sensor-gate signal XSG is illustrated in Figure 2F.

The frequency signal S1 applied to the terminal 61 is divided by a half frequency divider 72 to provide a frequency signal S2′ having a frequency of 4 fsc. This frequency signal S2′ is supplied through a gate circuit 73 to a phase adjusting circuit 74. The pulse SH3 from the horizontal ROM 65 is supplied to the gate circuit 73 as the gate pulse so that the phase adjusting circuit 74 is prevented from receiving the frequency signal S2′ in the period in which no horizontal transfer clock pulses H1 and H2 are produced within the vertical period.

The phase adjusting circuit 74 produces the horizontal transfer clock pulses H1 and H2, the reset pulse XPG and the sampling pulses SHP and SHD from the frequency signal S2′. The horizontal transfer clock pulses H1 and H2 are illustrated in Figures 6A and 6B, the reset pulse XPG is illustrated in Figure 6C and the sampling pulses SHP and SHD are illustrated in Figures 6F and 6G, respectively. Their phases are adjusted correspondingly. In this case, the phases of the horizontal transfer clock pulses H1 and H2 are adjusted considering the group delay in the horizontal clock driver which will be described later.

The phase adjusting section of the phase adjusting circuit 74 may be formed of an inverter series formed of inverters 91 connected in series as shown in Figure 17. In other words, the phase adjusting section is formed by utilising a propagation delay time of the inverters. In this case, in order to reproduce stably the delay time, the characteristics of the respective inverters 91 are selected to be the same. Also, the respective wiring or interconnection length between the adjacent inverters 91 is selected to be the same so that the capacity (which is the element that determines the delay time) relating to the output of each inverter 91 is made constant. At that time, in order to remove the scattering process (particularly the scattering in the capacity of the interconnection), the wiring length is made as short as possible. Each of the inverter series is treated as one cell including the layout of the inverters 91 and the wiring length between the inverters 91. In other words, the respective inverter series of the inverters 91 are located close to each other with the same configuration and the same characteristic. In the inverter series of the inverters 91, the phase adjustment is carried out by changing a point at which the output is produced. In Figure 17, the reference numeral 92 designates an output buffer.

The overall structure of the timing pulse generator circuit 60 is formed on the same substrate as an integrated circuit (IC) and the wiring thereof is made in the multilayer interconnection fashion (not shown). The interconnection of the phase adjusting section is the interconnection on the topmost layer, and is made of so-called 2Al. Thus, when one 2Al mask is changed, the phase is adjusted to be such that meets with the conditions of the external circuit.

The reset pulse XPG and the sampling pulses SHP and SHD of which the phases are adjusted by the phase adjusting circuit 74 are supplied to terminals 75, 76 and 77, respectively. Further, the horizontal transfer clock pulses H1 and H2 of which the phases are adjusted by the phase adjusting circuit 74 are supplied through horizontal clock drivers 781 and 782 to terminals 79 and 80, respectively. In this case, the horizontal clock drivers 781 and 782 are each formed by connecting inverters I1 to I5 in series as shown in Figure 18. In this case, as shown in Figure 19, each of the inverters I1 to I5 is formed by connecting a P-channel metal oxide semiconductor field-effect-transistor (MOSFET) QP and an N-channel MOSFET QN. In the inverters Il to I5, the channel width of the FETs QP and QN is gradually increased by about three times (the length of the channel is substantially constant) starting from the inverter I1 and ending with the inverter I5, thereby increasing the driving ability gradually.

Turning back to Figure 9, the frequency signal S2 of frequency 4 fsc from the frequency divider 66 is supplied to a terminal 81.

According to this embodiment as described above, since the pulses SH1, SH2 and SH3 repeating at the horizontal period are derived from the horizontal ROM 65, and the pulse SV1 repeating at the vertical period is derived from the vertical ROM 69, the amounts of data that are written in the ROMs 652, 653′, 654′ and 692 of the horizontal and vertical ROMs 65 and 69 are decreased, and thus the capacities of the ROMs used are reduced compared to those of the previous proposal.

Further, according to the horizontal and vertical ROMs 65 and 69 constructed as in the examples of Figures 10 and 16 respectively, since only the data preceding and subsequent to the change of the timing pulse are written in the ROMs 652 and 692, the amounts of data to be written can be further decreased, and thus the capacities of the ROMs 652 and 692 can be further reduced.

According to the examples in which the horizontal ROM 65 is constructed as shown in Figures 11 and 15, since the inverter data DCK between the changes of the timing pulse is written in the address ROM 653′ and only the data at the changing time of the timing pulse is written in the data ROM 654′, the amount of data to be written can be reduced more, and thus the capacities of the ROMs 653′ and 654′ can be further reduced.

The overall arrangement of the timing pulse generator circuit 60 is formed as an integrated circuit on the same substrate and multilayer interconnection may be utilised. Also, the interconnection of the phase adjusting circuit 74 is carried out by a so-called 2Al so that the phases of the horizontal transfer clock pulses H1, H2, the reset pulse XPG and the sampling pulses SHP and SHD can be adjusted in accordance with an external circuit condition by changing a piece of the 2Al mask, thus allowing the phase-adjustment to be performed with ease.

Further, since the horizontal clock drivers 781 and 782 are formed on the same substrate on which the timing generator circuit 60 is provided, regardless of the scattering in the temperature characteristics and integrated circuits, the phase relationship between the sampling pulses SHP, SHD and the horizontal transfer clock pulses H1, H2 can be maintained constant. Thus, the sampling operation can be precisely effected by the output circuit 20 by considering only the delay time in the CCD device 1.

Incidentally, it may be considered that the preset pulse driver 35 may also be formed on the same substrate on which the timing pulse generator 60 is provided. However, if the level of the reset pulse PG is not sufficiently high, the reset will not be sufficiently effected. In this embodiment, the preset pulse driver 35 is not formed on the same substrate on which the timing pulse generator circuit 60 is provided in order to make the level of the reset pulse PG sufficiently high, because the preset pulse driver 35 can be better simplified in circuit arrangement if it is formed as an external circuit operable by a different power source.

## Claims

1. A timing pulse generator for generating at least a first timing pulse (SV1) with a vertical scanning frequency and a second timing pulse (P1, P2) with a horizontal scanning frequency (fH), both of said first and second timing pulses (SV1, P1, P2) being used for controlling a charge coupled device imager (1), said timing pulse generator (60) comprising:
a first address counter (691) for counting a first reference pulse (CLKV) having the horizontal scanning frequency (fH);
first read only memory means (692) supplied with the output of said first address counter (691) as a read out address control signal and for generating said first timing pulse (SV1);
a second address counter (651) for counting a second reference pulse (CLKH) having a frequency an integer multiple times higher than that of said horizontal scanning frequency (fH);
second read only memory means (652) supplied with the output of said second address counter (651) as a read out address control signal and for generating said second timing pulse (P1, P2); and
clock signal generating means (68) for generating clock signals (V1' to V4') in accordance with said first and second timing pulses (SV1, P1, P2).

2. A timing pulse generator according to claim 1, wherein said second read only memory means includes a first read only memory (654') storing logical level data and a second read only memory (653') storing pulse duration data, the output of said first read only memory (654') being operable to generate said second timing pulse (P1, P2), and said second address counter includes a first counter (651'') for counting said second reference pulse (CLKH) and for generating an output when the counted value thereof becomes a matching predetermined relation with the output (DCK) of said second read only memory (653') and a second counter (652') controlled by the output of said first counter (651"), the output of said second counter (652') being operable to control the address of said first read only memory (654') and to control the address of said second read only memory (653').

## Patentansprüche

1. Zeitsteuerungsimpulsgenerator zur Erzeugung von mindestens einem ersten Zeitsteuerungsimpuls (SV1) mit einer vertikalen Abtastfrequenz und einem zweiten Zeitsteuerungsimpuls (P1, P2) mit einer horizontalen Abtastfrequenz (fH), wobei sowohl die ersten wie auch die zweiten Zeitsteuerungsimpulse (SV1, P1, P2) zur Steuerung eines CCD-Bildwandlers (1) verwendet werden, wobei der Zeitsteuerungsimpulsgenerator (60) aufweist:
einen ersten Adressenzähler (691) zum Zählen eines ersten Refernzimpulses (CLKV) mit der horizontalen Abtastfrequenz (fH);
eine erste Nur-Lese-Speichereinrichtung (692), welcher das Ausgangssignal des ersten Adressenzählers (691) als ein Ausleseadressensteuersignal zur Erzeugung des ersten Zeitsteuerungsimpulses (SV1) zugeführt wird;
einen zweiten Adressenzähler (651) zum Zählen eines zweiten Referenzimpulses (CLKH) mit einer Frequenz, welche um ein ganzzahliges Vielfaches höher als jene der horizontalen Abtastfrequenz (fH) ist;
eine zweite Nur-Lese-Speichereinrichtung (652), welcher das Ausgangssignal des zweiten Adressenzählers (651) als ein Ausleseadressensteuersignal zur Erzeugung des zweiten Zeitsteuerungsimpulses (P1, P2)) zugeführt wird; und
eine Taktsignalerzeugungseinrichtung (68) zur Erzeugung von Taktsignalen (V1' bis V4') gemäß den ersten und zweiten Zeitsteuerungsimpulsen (SV1, P1, P2).

2. Zeitsteuerungstaktimpulsgenerator nach Anspruch 1, bei welchem die zweite Nur-Lese-Speichereinrichtung einen ersten Nur-Lese-Speicher (654'), welcher logische Pegeldaten speichert, und einen zweiten Nur-Lese-Speicher (653'), welcher Impulsdauerdaten speichert, enthält, wobei das Ausgangssignal des ersten Nur-Lese-Speichers (654') betriebsfähig ist, einen zweiten Zeitsteuerungsimpuls (P1, P2) zu erzeugen, und bei welchem der zweite Adressenzähler einen ersten Zähler (651') zum Zählen des zweiten Referenzimpulses (CLKH) und zum Erzeugen eines Ausgangssignals, sobald der gezählte Wert einer vorgegebene Beziehung mit dem Ausgangssignal (DCK) des zweiten Nur-Lese-Speichers (653') entspricht, und einen zweiten Zähler (652'), welcher durch das Ausgangssignal des ersten Zählers (651') gesteuert wird, enthält, wobei das Ausgangssignal des zweiten Zählers (652') betriebsfähig ist, die Adresse des ersten Nur-Lese-Speichers (654') zu steuern und die Adresse des zweiten Nur-Lese-Speichers (653') zu steuern.

## Revendications

1. Générateur d'impulsions de cadencement pour produire au moins une première impulsion de cadencement (SV1) avec une fréquence de balayage vertical et une deuxième impulsion de cadencement (P1, P2) avec une fréquence de balayage horizontal (fH), les deux desdites première et deuxième impulsions de cadencement (SV1, P1, P2) étant utilisées pour commander un capteur d'images à dispositif à couplage de charges (1), ledit générateur d'impulsions de cadencement (60) comprenant:
- un premier compteur d'adresses 691 pour compter une première impulsion de référence (CLKV) ayant la fréquence de balayage horizontal (fH);
- des premiers moyens de mémoire morte (692) recevant le signal de sortie dudit premier compteur d'adresses (691) comme signal de commande d'adresse de lecture et pour produire ladite première impulsion de cadencement (SV1);
- un deuxième compteur d'adresses (651) pour compter une deuxième impulsion de référence CLKH ayant une fréquence un multiple entier de fois plus élevée que celle de ladite fréquence de balayage horizontal (fH);
- des deuxièmes moyens de mémoire morte (652) recevant le signal de sortie dudit deuxième compteur d'adresses (651) comme signal de commande d'adresse de lecture et pour produire ladite deuxième impulsion de cadencement (P1, P2); et
- des moyens générateurs de signaux d'horloge (68) pour produire des signaux d'horloge (V1' à V4') selon lesdites première et deuxième impulsions de cadencement (SV1, P1, P2).

2. Générateur d'impulsions de cadencement selon la revendication 1, dans lequel lesdits deuxièmes moyens de mémoire morte comprennent une première mémoire morte (654') mémorisant des données de niveaux logiques, et une deuxième mémoire morte (653') mémorisant des données de durée d'impulsions, la sortie desdits premier moyens de mémoire morte (654') pouvant fonctionner pour produire ladite deuxième impulsions de cadencement (P1, P2), et ledit deuxième compteur d'adresses comprend un premier compteur (651) pour compter ladite deuxième impulsion de référence (CLKH) et pour produire un signal de sortie lorsque la valeur comptée de celui-ci devient une relation prédéterminée de correspondance avec le signal de sortie (DCK) de ladite deuxième mémoire morte (653') et un deuxième compteur (652') commandé par le signal de sortie dudit premier compteur (651), le signal de sortie dudit deuxième compteur (652') pouvant être utilisé pour commander l'adresse de ladite première mémoire morte (654') et pour commander l'adresse de ladite deuxième mémoire morte (653').
